# EUROPEAN PATENT APPLICATION

(11) **EP 4 485 150 A1**
(43) Date of publication of application: **01.01.2025**
(21) Application number: 22927198.6
(22) Date of filing: 21.02.2022
(51) Int. Cl.: G06F 3/02, G06F 3/0338

(54) **INPUT DEVICE AND CONTROLLER**

(71) Applicant: Nintendo Co., Ltd., Kyoto-shi, Kyoto 601-8501 (JP)
(72) Inventor: KORIYAMA, Kazuhiko, Kyoto-shi, Kyoto 601-8501 (JP)
(74) Representative: Bardehle Pagenberg Partnerschaft mbB Patentanwälte Rechtsanwälte
(86) International application number: PCT/JP2022/006962
(87) International publication number: WO 2023/157299

(57) **Abstract**

An input device includes a circuit board and an operation module. The circuit board is provided with a first opening or a notch. The operation module includes a module housing and an operation member. The operation member is accommodated in the module housing such that a part thereof is exposed to the outside of the module housing, and is tiltably and slidably operated. When viewed in a direction of thickness of the circuit board, the module housing is larger in size than the first opening or the notch. The module housing includes an opposing portion opposed to the circuit board while a part of the module housing is disposed to pass through the first opening or the notch. The operation module and the circuit board are fixed by fixing the opposing portion and the circuit board.

## Description

### TECHNICAL FIELD

The present disclosure relates to an input device and a controller.

### BACKGROUND ART

Japanese Patent Laying-Open No. 2002-328733 (PTL 1) discloses an operation input device including operation input means and a substrate. In the operation input device, the operation input means is arranged on the substrate.

### CITATION LIST

### PATENT LITERATURE

PTL 1: Japanese Patent Laying-Open No. 2002-328733

### SUMMARY OF INVENTION

### TECHNICAL PROBLEM

According to the operation input device, a joy stick is mounted on the substrate, and therefore the operation input device should have a certain thickness. An object of the present disclosure is to reduce a size of an input device and a controller.

### SOLUTION TO PROBLEM

An input device according to the present disclosure includes a circuit board and an operation module. The circuit board is provided with a first opening or a notch. The operation module includes a module housing and an operation member. The operation member is accommodated in the module housing such that a part of the operation member is exposed to the outside of the module housing, and the operation member is tiltably or slidably operated. When viewed in a direction of thickness of the circuit board, the module housing is larger in size than the first opening or the notch. The module housing includes an opposing portion opposed to the circuit board while a part of the module housing is disposed to pass through the first opening or the notch. The operation module and the circuit board are fixed by fixing the opposing portion and the circuit board.

According to the input device according to the present disclosure, a part of the module housing is disposed to pass through the first opening or the notch. According to the input device according to the present disclosure, when viewed in the direction of thickness of the circuit board, the module housing is larger in size than the first opening or the notch. As the first opening or the notch is made smaller in size than the module housing, an area of the circuit board can effectively be made use of. The input device can thus be reduced in size.

In the input device according to the above, the operation member may include a first component attached to a portion exposed to the outside of the module housing, the first component being larger than the first opening or the notch when viewed in the direction of thickness of the circuit board. While the operation module and the circuit board are fixed, the opposing portion may be located on a rear surface side of the circuit board and the first component may be located on a front surface side of the circuit board. Thus, after the module housing is inserted into the first opening from the rear surface side of the circuit board without the first component being attached to the operation member, the first component larger than the first opening or the notch can be attached to the portion exposed to the outside of the module housing to provide the operation member. Therefore, a large component can be provided in the operation member without the first opening or the notch being excessively large in size.

In the input device according to the above, the first component may include a key top operated by a user, a shaft portion, and a projection. The shaft portion may extend from the key top toward the circuit board. The projection may project in a direction away from a center of the shaft portion and in a direction toward the circuit board.

In the input device according to the above, the circuit board may be provided with the first opening. A sensor that outputs a signal in accordance with a position or a motion of the projection or force applied to the projection may be arranged on a front surface of the circuit board. When the sensor is viewed in a direction perpendicular to the front surface, the sensor may be in an annular shape that surrounds the first opening. A center of the sensor in the annular shape and a center of the projection may coincide with a central axis of an operation to tilt or slide the operation member. The sensor can thus more accurately detect a signal in accordance with a position or a motion of the projection or force applied to the projection.

In the input device according to the above, the circuit board may be provided with the notch. A width of the notch at an outer peripheral end of the circuit board may be larger than a width of the module housing. The first component may include a key top operated by a user and a shaft portion. The shaft portion may extend from the key top toward the circuit board. The operation member may include the shaft portion fixed as being integrated with the first component. Thus, even when the first component is fixed as being integrated with the shaft portion, the module housing can be introduced into the notch from the outer peripheral end of the circuit board. Therefore, a space in the circuit board that can effectively be made use of can be larger than in an example where the first opening is provided.

In the input device according to the above, a sensor that outputs a signal in accordance with a position or a motion of the operation member or force applied to the operation member may be arranged on a front surface side of the circuit board. The opposing portion may be located on a rear surface side of the circuit board. As compared with an example where the sensor and the opposing portion are arranged on the same surface, the sensor can be arranged while the space in the circuit board is made effective use of.

In the input device according to the above, when viewed in the direction of thickness of the circuit board, the sensor may be arranged on an inner side of an outer periphery of the opposing portion, with an end of the first opening or an end of the notch being defined as a reference. The sensor can thus be closer to the operation member. Therefore, an area of the circuit board that can effectively be made use of can be increased. As the sensor is brought closer to the operation member, the first component is made smaller. Therefore, the input device can be reduced in size.

In the input device according to the above, the opposing portion may include a fixed portion fixed to the circuit board. When viewed in the direction of thickness of the circuit board, the sensor may be located on an inner side of the fixed portion, with an end of the first opening or an end of the notch being defined as a reference. The sensor can thus be brought closer to the operation member, and therefore an area of the circuit board that can effectively be made use of can be increased.

In the input device according to the above, when viewed in the direction of thickness of the circuit board, a distance between an end of the first opening or an end of the notch and an outer periphery of the opposing portion may be longer than a distance between the end of the first opening or the end of the notch and an outer periphery of the sensor. The sensor can thus be brought closer to the operation member, and therefore an area of the circuit board that can effectively be made use of can be increased.

In the input device according to the above, the opposing portion may include a fixed portion fixed to the circuit board. A screw boss may serve as the fixed portion, and the fixed portion may be fixed as a screw passes through the circuit board from a surface opposite to a surface of the circuit board where the opposing portion is located and is fastened to the screw boss. The operation module can thus be fixed to the circuit board while the space is effectively made use of.

In the input device according to the above, the module housing may include a first electrode in the opposing portion. The circuit board may be provided with a second electrode, and the first electrode and the second electrode may electrically be connected to each other. A signal outputted from the module housing can thus be taken out of the opposing portion.

A controller according to the present disclosure includes a circuit board, an operation module, and a controller housing. The circuit board is provided with a first opening or a notch. The circuit board and a part of the operation module are accommodated in the controller housing, and the controller housing is provided with a second opening. The operation module includes a module housing and an operation member. The operation member is disposed such that a part of the operation member is exposed through the first opening or the notch and the second opening, the operation member being tiltably or slidably operated. The module housing includes an opposing portion opposed to the circuit board while a part of the module housing is disposed to pass through the first opening or the notch. The operation module and the circuit board are fixed by fixing the opposing portion and the circuit board.

According to the controller according to the present disclosure, a part of the module housing is disposed to pass through the first opening or the notch. A portion that projects in the direction of thickness of the circuit board can thus be shorter in length. Therefore, the controller can be reduced in size.

In the controller according to the above, the operation member may include a first component attached to a portion exposed to the outside of the module housing, the first component being larger than the first opening or the notch when viewed in a direction of thickness of the circuit board. The first component may include a projection, a key top, and a shaft portion. The projection may be accommodated in the inside of the controller housing. The key top may be located on the outside of the controller housing. The shaft portion may extend from the key top toward the circuit board. The projection may project in a direction away from a center of the shaft portion and in a direction toward the circuit board. When viewed in the direction of thickness of the circuit board, the key top may be smaller in size than the second opening and the projection may be larger in size than the second opening. Introduction of dust through the second opening into the controller housing can thus be suppressed.

In the controller according to the above, the circuit board may be provided with the first opening. A sensor that outputs a signal in accordance with a position or a motion of the projection or force applied to the projection may be arranged on a front surface of the circuit board. When the sensor is viewed in a direction perpendicular to the front surface, the sensor may be in an annular shape that surrounds the first opening. A center of the sensor in the annular shape and a center of the projection may coincide with a central axis of an operation to tilt or slide the operation member. The sensor can thus more accurately detect a motion of the projection.

In the controller according to the above, the circuit board may be provided with the notch. A width of the notch at an outer peripheral end of the circuit board may be larger than a width of the module housing. The operation member may include a shaft portion fixed as being integrated with the first component. Thus, even when the first component is fixed as being integrated with the shaft portion, the module housing can be introduced into the notch from the outer peripheral end of the circuit board. Therefore, a space in the circuit board that can effectively be made use of can be larger than in an example where the first opening is provided.

In the controller according to the above, a sensor that outputs a signal in accordance with a position or a motion of the operation member or force applied to the operation member may be arranged on a front surface side of the circuit board. The opposing portion may be located on a rear surface side of the circuit board. As compared with an example where the sensor and the opposing portion are arranged on the same surface, the sensor can thus be arranged while the space in the circuit board is made effective use of.

In the controller according to the above, when viewed in the direction of thickness of the circuit board, the sensor may be arranged on an inner side of an outer periphery of the opposing portion, with an end of the first opening or an end of the notch being defined as a reference. The sensor can thus be closer to the operation member. Therefore, an area of the circuit board that can effectively be made use of can be increased. As the sensor is brought closer to the operation member, the first component is made smaller. Therefore, the controller can be reduced in size.

In the controller according to the above, the opposing portion may include a fixed portion fixed to the circuit board. When viewed in the direction of thickness of the circuit board, the sensor may be located on an inner side of the fixed portion, with an end of the first opening or an end of the notch being defined as a reference. The sensor can thus be brought closer to the operation member, and therefore an area of the circuit board that can effectively be made use of can be increased.

In the controller according to the above, when viewed in the direction of thickness of the circuit board, a distance between an end of the first opening or an end of the notch and an outer periphery of the opposing portion may be longer than a distance between the end of the first opening or the end of the notch and an outer periphery of the sensor. The sensor can thus be brought closer to the operation member, and therefore an area of the circuit board that can effectively be made use of can be increased.

In the controller according to the above, the opposing portion may include a fixed portion fixed to the circuit board. A screw boss may serve as the fixed portion, and the fixed portion may be fixed as a screw passes through the circuit board from a surface opposite to a surface of the circuit board where the opposing portion is located and is fastened to the screw boss. The operation module can thus be fixed as being positioned with respect to the circuit board while the space is effectively made use of.

In the controller according to the above, the module housing may include a first electrode. The circuit board may be provided with a second electrode, and the first electrode and the second electrode may electrically be connected to each other. A signal outputted from the module housing can thus be taken out of the opposing portion.

### ADVANTAGEOUS EFFECTS OF INVENTION

According to the present disclosure, the input device and the controller can be reduced in size.

### BRIEF DESCRIPTION OF DRAWINGS

Fig. 1 is an exploded schematic perspective view showing a construction of an input device according to a first embodiment.
Fig. 2 is a schematic perspective view showing the construction of the input device according to the first embodiment.
Fig. 3 is a schematic plan view showing the construction of the input device according to the first embodiment.
Fig. 4 is a schematic partial cross-sectional view along the line IV-IV in Fig. 3.
Fig. 5 is an enlarged schematic cross-sectional view of a region V in Fig. 4.
Fig. 6 is a schematic partial cross-sectional view along the line VI-VI in Fig. 3.
Fig. 7 is a schematic cross-sectional view showing a construction of a sensor.
Fig. 8 is an exploded schematic plan view showing a construction of the input device according to a second embodiment.
Fig. 9 is a schematic plan view showing a construction of a controller according to a third embodiment.
Fig. 10 is a schematic partial cross-sectional view along the line X-X in Fig. 9.
Fig. 11 is a schematic partial cross-sectional view showing a construction of the controller according to a fourth embodiment.

### DESCRIPTION OF EMBODIMENTS

An embodiment of the present disclosure will be described in detail with reference to the drawings. The same or corresponding elements in the drawings have the same reference characters allotted and description thereof will not be repeated.

### (First Embodiment)

A construction of an input device 100 according to a first embodiment will initially be described.

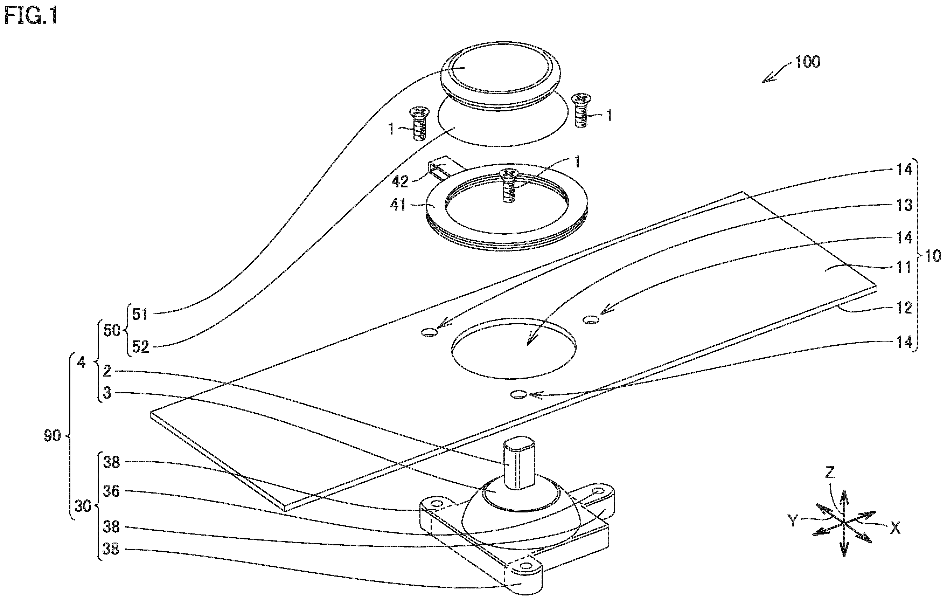

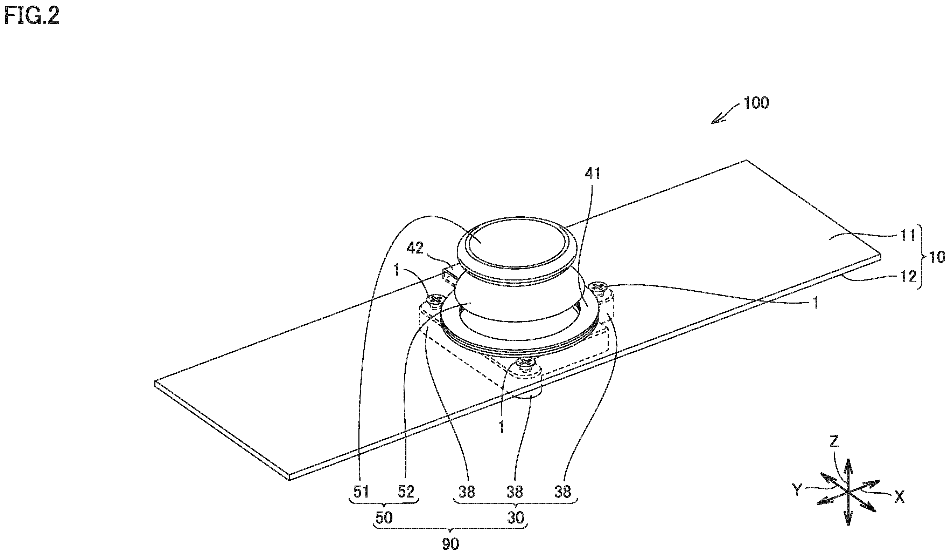

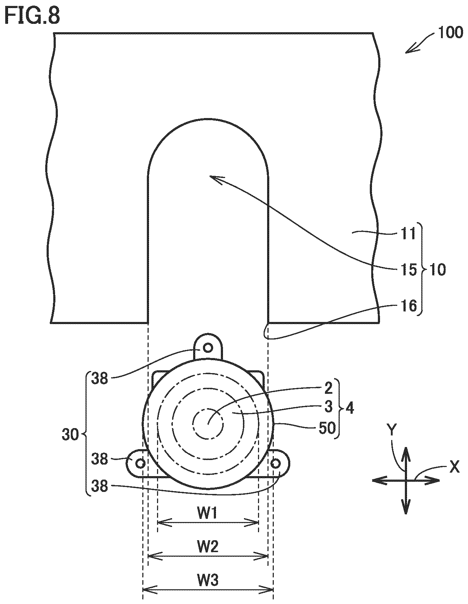

Fig. 1 is an exploded schematic perspective view showing the construction of input device 100 according to the first embodiment. Fig. 2 is a schematic perspective view showing the construction of input device 100 according to the first embodiment. As shown in Figs. 1 and 2, input device 100 according to the first embodiment mainly includes a circuit board 10, an operation module 90, a sensor 41, a flexible printed circuit 42, and a screw 1. Circuit board 10 includes a front surface 11 and a rear surface 12. Rear surface 12 is located opposite to front surface 11. Circuit board 10 is provided with a first opening 13. First opening 13 passes through circuit board 10. First opening 13 opens in each of front surface 11 and rear surface 12. Circuit board 10 may be provided with a notch 15 (see Fig. 8) instead of first opening 13. Details of the construction of notch 15 will be described later.

A direction from rear surface 12 toward front surface 11 herein is defined as an upward direction. In contrast, a direction from front surface 11 toward rear surface 12 is defined as a downward direction. A longitudinal direction of circuit board 10 is defined as a first direction X. A direction of a short side of circuit board 10 is defined as a second direction Y. A direction of thickness of circuit board 10 is defined as a third direction Z. Each of first direction X and second direction Y is perpendicular to third direction Z. Third direction Z is perpendicular to front surface 11 of circuit board 10. Each of first direction X and second direction Y is in parallel to front surface 11 of circuit board 10.

As shown in Fig. 1, operation module 90 mainly includes a module housing 30 and an operation member 4. Operation member 4 is accommodated in module housing 30 such that a part thereof is exposed to the outside of module housing 30. Operation member 4 includes a first component 50. First component 50 is attached to a portion exposed to the outside of module housing 30. First component 50 is located on the outside of module housing 30. First component 50 includes a key top 51 and a projection 52. Key top 51 is contiguous to projection 52. Key top 51 is located on projection 52.

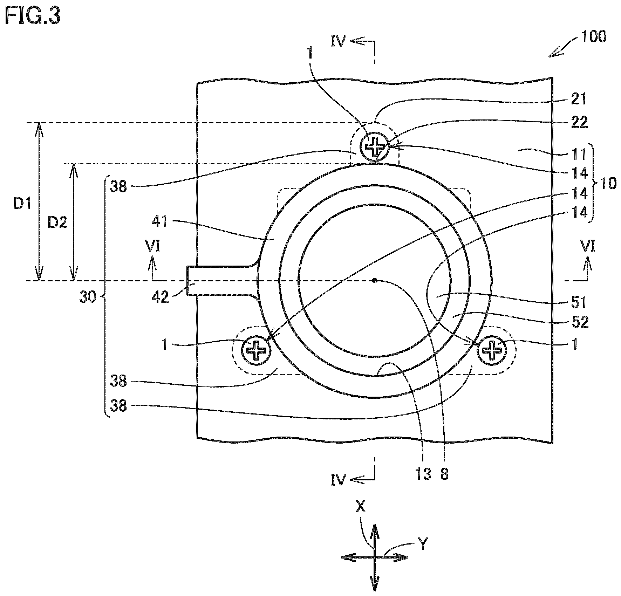

For example, a skirt portion is provided as projection 52. The skirt portion is in a form like an umbrella. The skirt portion is constructed to spread toward a lower part of shaft portion 2 along third direction Z. When operation member 4 is tilted, the skirt portion may be in direct contact with circuit board 10, or in an example where sensor 41 is provided on circuit board 10, the skirt portion may be in direct contact with sensor 41. The skirt portion may be in indirect contact with circuit board 10 or sensor 41, with another member such as a protective sheet being interposed. The skirt portion projects in a direction away from the center of shaft portion 2 (specifically, first direction X and second direction Y). More specifically, when viewed in a direction in parallel to front surface 11 of circuit board 10, the skirt portion has a side surface in an arc shape. When viewed in the direction perpendicular to front surface 11 of circuit board 10, the skirt portion has a lower end (tip end) in a circular shape (see Fig. 3).

Circuit board 10 is provided with a screw insertion hole 14. The number of screw insertion holes 14 is not particularly limited, and for example, three screw insertion holes 14 are provided. Screw insertion hole 14 is provided around first opening 13. Screw insertion hole 14 passes through circuit board 10. Screw insertion hole 14 opens in each of front surface 11 and rear surface 12. Screw 1 is inserted in screw insertion hole 14. An electronic component (not shown) such as a capacitor may be mounted on circuit board 10. For example, a flexible printed circuit (FPC) or a membrane sheet may be employed for the circuit board. For example, a polyimide resin, a liquid crystal polymer, or an epoxy resin may be employed as a material for the FPC. For example, polyethylene terephthalate (PET) may be employed as a material for the membrane sheet. A part of circuit board 10 may be bent in a direction of height of circuit board 10 or a direction in parallel to the circuit board (first direction X or second direction Y). For example, copper, silver, or carbon is employed for an interconnection pattern of circuit board 10.

Module housing 30 may be composed of combination of a plurality of components or may be composed of a single component. Module housing 30 includes an opposing portion 38 opposed to circuit board 10. A part of module housing 30 may be, for example, in a shape of a dome that opens upward. A part of module housing 30 is disposed to pass through first opening 13 or notch 15. As shown in Fig. 2, opposing portion 38 is opposed to circuit board 10 while a part of module housing 30 is disposed to pass through first opening 13 or notch 15. Since the dome shape in an upper portion of module housing 30 is disposed in first opening 13, module housing 30 may rotate around the direction of thickness (third direction Z) of circuit board 10. In order to suppress a degree of freedom of rotation, when circuit board 10 and module housing 30 are viewed in third direction Z, a protrusion may be provided in first opening 13 and a recess may be provided in the upper portion of module housing 30. Operation module 90 and circuit board 10 are fixed by fixing opposing portion 38 and circuit board 10.

Opposing portion 38 includes a fixed portion 36. Fixed portion 36 is fixed to circuit board 10. The number of fixed portions 36 is not particularly limited, and for example, three fixed portions 36 are provided. Fixed portion 36 includes, for example, a fixing structure such as a screw boss. Fixed portion 36 may be fixed by fastening of screw 1 to the screw boss through circuit board 10 from a surface (front surface 11) opposite to a surface (rear surface 12) of circuit board 10 where opposing portion 38 is located. Fixed portion 36 is not limited to the structure including the screw boss. Fixed portion 36 may include a fixing structure such as a nut insert. Alternatively, a hole through which a screw passes may be adopted as fixed portion 36. Module housing 30 may be fixed to circuit board 10 by soldering or an adhesive. From another point of view, the module housing may be fixed with the use of solder or an adhesive in fixed portion 36.

As shown in Fig. 2, sensor 41 may be arranged on front surface 11 of circuit board 10. Sensor 41 outputs a signal in accordance with a position or a motion of projection 52 or force applied to projection 52. Sensor 41 may surround module housing 30. A part of module housing 30 is disposed to pass through first opening 13 or notch 15. Therefore, a portion that projects in the direction of thickness of circuit board 10 can be short in length. According to such a structure, at a smaller angle of tilt, an end of projection 52 (skirt portion) can be in contact with sensor 41 or can be within a sensing distance of sensor 41. Therefore, sensor 41 can be arranged in proximity to operation module 90 and an effective area of circuit board 10 can be increased.

Fig. 3 is a schematic plan view showing the construction of input device 100 according to the first embodiment. As shown in Fig. 3, when viewed in the direction of thickness of circuit board 10, module housing 30 is larger in size than first opening 13. Module housing 30 is shaped not to pass through first opening 13. Module housing 30 is shaped not to be movable from one surface side through first opening 13 to the other surface side. From another point of view, when viewed in the direction of thickness of circuit board 10, a part of module housing 30 may be superimposed on front surface 11 of circuit board 10. When viewed in the direction of thickness of circuit board 10, an outer periphery of module housing 30 may surround first opening 13.

As shown in Fig. 3, when sensor 41 is viewed in the direction perpendicular to front surface 11, sensor 41 may be in an annular shape that surrounds first opening 13. A center of annular sensor 41 and a center of projection 52 may coincide with a central axis 8 of tilt of operation member 4. Central axis 8 may coincide with a center of first opening 13. When viewed in the direction of thickness of circuit board 10, sensor 41 may be arranged on an inner side of an outer periphery (a first outer periphery 21) of opposing portion 38 with the end of first opening 13 being defined as the reference.

As shown in Fig. 3, when viewed in the direction of thickness of circuit board 10, sensor 41 may be located on an inner side (that is, on a side of first opening 13 or a side of central axis 8) of fixed portion 36 to which screw 1 is fixed, with the end of first opening 13 being defined as the reference. When viewed in the direction perpendicular to front surface 11 of circuit board 10, a distance (a first distance D1) between the center of first opening 13 and the outer periphery (first outer periphery 21) of opposing portion 38 may be longer than a distance (a second distance D2) between the center of first opening 13 and an outer periphery (a second outer periphery 22) of sensor 41. Similarly, a distance between the end of first opening 13 and the outer periphery (first outer periphery 21) of opposing portion 38 may be longer than the distance between the end of first opening 13 and the outer periphery (second outer periphery 22) of sensor 41.

Though a construction in which sensor 41 is located on the inner side of screw 1 is described above, the present disclosure is not limited to the construction above. Sensor 41 may be arranged on an outer side of the outer periphery (first outer periphery 21) of opposing portion 38. First distance D1 may be equal to or shorter than second distance D2.

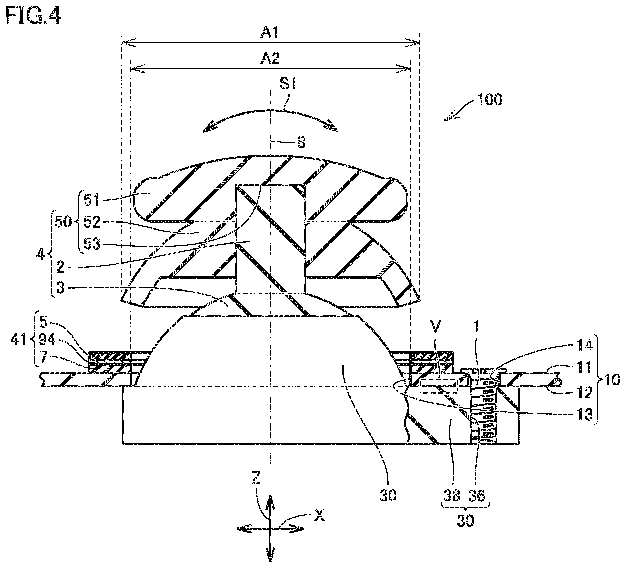

Fig. 4 is a schematic partial cross-sectional view along the line IV-IV in Fig. 3. The schematic partial cross-sectional view shown in Fig. 4 is in parallel to each of first direction X and third direction Z. As shown in Fig. 4, operation member 4 further includes a shaft portion 2 and a support member 3. Shaft portion 2 is contiguous to support member 3. First component 50 is provided with an insertion hole 53. Insertion hole 53 passes through projection 52 and reaches key top 51. Shaft portion 2 is inserted in insertion hole 53. Shaft portion 2 extends along central axis 8 of operation member 4. Support member 3 is arranged inside module housing 30. A part of support member 3 may be exposed to the outside of module housing 30. Projection 52 is, for example, in a form like an umbrella. Projection 52 covers a part of module housing 30. Key top 51 and projection 52 may be integrated. First component 50 may be attachable to and removable from shaft portion 2. Key top 51, projection 52, and shaft portion 2 may be integrated. In this case, shaft portion 2 may be included in first component 50.

Operation member 4 is tiltable, for example. Operation member 4 may be tiltable with respect to central axis 8 in a cross-section in parallel to each of first direction X and third direction Z. Operation member 4 is tiltable, for example, along a first direction of tilt S1. Key top 51, projection 52, shaft portion 2, and support member 3 are tilted as being integrated.

As shown in Fig. 4, while operation module 90 and circuit board 10 are fixed, a part of module housing 30 passes through first opening 13. Specifically, a part of module housing 30 passes through first opening 13 and projects upward.

Opposing portion 38 extends along rear surface 12 of circuit board 10. Opposing portion 38 extends, for example, along first direction X. Opposing portion 38 is located, for example, on a rear surface 12 side of circuit board 10. Screw insertion hole 14 provided in circuit board 10 is positioned with respect to fixed portion 36 provided in opposing portion 38. Fixed portion 36 is provided with a groove (not shown) that can be fastened to screw 1. Screw 1 passes through screw insertion hole 14 and is fastened to fixed portion 36.

With operation member 4 being centered, sensor 41 may be located on the inner side of fixed portion 36. From another point of view, sensor 41 may be located between fixed portion 36 and central axis 8 of operation member 4. Sensor 41 may be located between fixed portion 36 and a part of module housing 30.

Though an example in which opposing portion 38 is located on the rear surface 12 side of circuit board 10 is described above, the position of opposing portion 38 is not limited to the position on the rear surface 12 side. Opposing portion 38 may be located on a front surface 11 side of circuit board 10. In this case, first component 50 is located on the front surface 11 side of circuit board 10. The surface of circuit board 10 close to first component 50 is front surface 11.

As shown in Fig. 4, while operation module 90 and circuit board 10 are fixed, first component 50 of operation member 4 is located on the front surface 11 side of circuit board 10. Specifically, key top 51, projection 52, and shaft portion 2 are located on the front surface 11 side. In third direction Z, circuit board 10 is provided between sensor 41 and opposing portion 38.

First component 50 may be larger than first opening 13 or notch 15. First component 50 is shaped not to pass through first opening 13 or notch 15. Specifically, a diameter (a first diameter A1) of projection 52 may be larger than a diameter (a second diameter A2) of first opening 13. From another point of view, when viewed in third direction Z, an outer periphery of projection 52 may surround first opening 13.

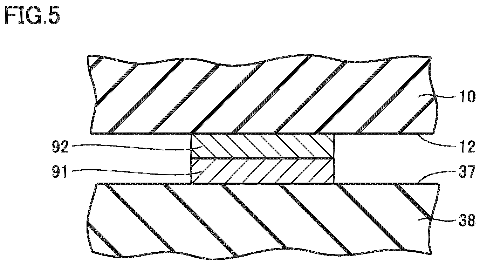

Fig. 5 is an enlarged schematic cross-sectional view of a region V in Fig. 4. Module housing 30 may be electrically conductive in opposing portion 38. As shown in Fig. 5, opposing portion 38 may be provided with a first electrode 91. First electrode 91 is provided on a second front surface 37 of opposing portion 38. Second front surface 37 is opposed to rear surface 12. Circuit board 10 may be provided with a second electrode 92. Second electrode 92 is provided on rear surface 12 of circuit board 10. While operation module 90 and circuit board 10 are fixed, first electrode 91 of opposing portion 38 and second electrode 92 of circuit board 10 may electrically be connected to each other.

First electrode 91 may electrically be connected, for example, to a variable resistor (not shown) that outputs a signal in accordance with an inclination or a position of operation member 4. The variable resistor may be provided in the inside or on the outside of module housing 30. A signal outputted from the variable resistor may be taken out through circuit board 10.

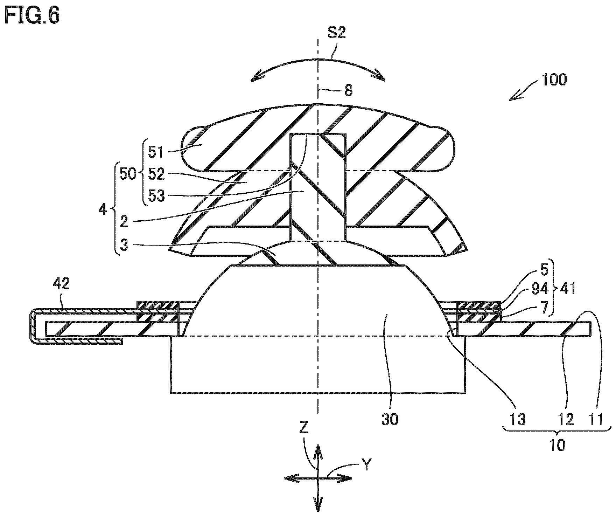

Fig. 6 is a schematic partial cross-sectional view along the line VI-VI in Fig. 3. The schematic partial cross-sectional view shown in Fig. 6 is in parallel to each of second direction Y and third direction Z. As shown in Fig. 6, operation member 4 may be tiltable with respect to central axis 8 in a cross-section in parallel to each of second direction Y and third direction Z. Operation member 4 is tiltable, for example, along a second direction of tilt S2. Operation member 4 may be tiltable in all directions perpendicular to third direction Z.

Sensor 41 includes a restriction portion 5. Restriction portion 5 can restrict tilt of operation member 4. Specifically, when operation member 4 is tilted along second direction of tilt S2, projection 52 comes in contact with restriction portion 5, which restricts tilt of operation member 4. Flexible printed circuit 42 may be connected to sensor 41 on the front surface 11 side of circuit board 10. Flexible printed circuit 42 may be folded back at an end of circuit board 10 and extend to the rear surface 12 side of circuit board 10.

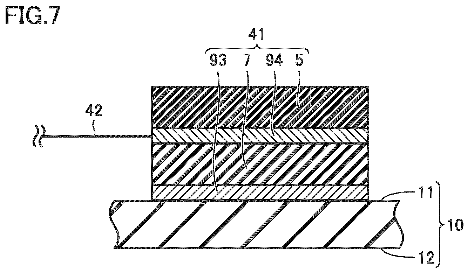

Fig. 7 is a schematic cross-sectional view showing a construction of sensor 41. As shown in Fig. 7, sensor 41 may further include a third electrode 93, a cushion material 7, and a fourth electrode 94. Third electrode 93 is provided on front surface 11 of circuit board 10. Cushion material 7 is provided on third electrode 93. Fourth electrode 94 is provided on cushion material 7. Cushion material 7 lies between third electrode 93 and fourth electrode 94. Restriction portion 5 is provided on fourth electrode 94. Sensor 41 is, for example, a capacitive pressure sensor.

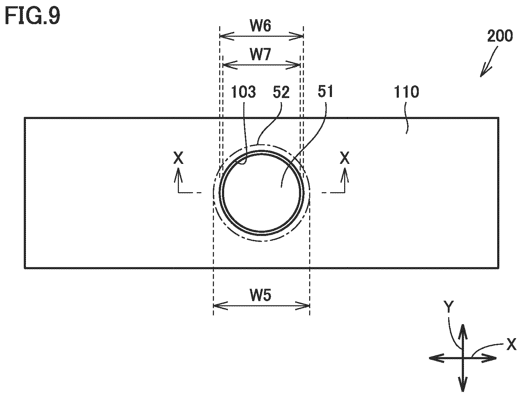

As the user operates operation member 4 and projection 52 comes in contact with restriction portion 5, a load is applied to sensor 41. Cushion material 7 thus deforms. Consequently, a distance between third electrode 93 and fourth electrode 94 varies, which results in variation in capacitance of sensor 41. In other words, sensor 41 detects the capacitance that varies as a result of contact by projection 52. The load may be calculated based on the capacitance between third electrode 93 and fourth electrode 94 or change in capacitance. A controller 200 (see Fig. 9) may include a not-shown computer. The computer may calculate the load based on the capacitance or change in capacitance.

The computer may carry out certain control linearly or stepwise based on the detected capacitance or the calculated load. The computer may carry out certain control in response to the load exceeding a certain threshold value. Though an example in which the capacitive pressure sensor is adopted as sensor 41 is described above, sensor 41 is not limited to the capacitive pressure sensor. For example, a wireless capacitive proximity sensor may be adopted as sensor 41.

In detection of a signal in accordance with a position or a motion of projection 52, for example, the signal may be detected by a capacitive proximity sensor. Alternatively, in detection of a signal in accordance with force applied by projection 52, the signal may be detected, for example, by a resistive, strain gauge, or capacitive pressure sensor. The pressure sensor is not limited to the type above, and a pressure sensor of any other type may be employed as appropriate. A wireless capacitive proximity sensor and a pressure sensor of a capacitive type or the like may be used to detect a signal in accordance with a position or a motion of projection 52 and a signal in accordance with force applied by projection 52.

A method of incorporating operation module 90 of input device 100 according to the first embodiment into circuit board 10 will now be described.

Initially, module housing 30 and operation member 4 to which first component 50 is not attached are inserted in first opening 13 provided in circuit board 10. Module housing 30 and operation member 4 to which first component 50 is not attached are then fixed to circuit board 10 with the use of opposing portion 38. First component 50 is then attached to shaft portion 2. First component 50 can thus be attached to shaft portion 2 without first opening 13 being made larger than first component 50. Therefore, an effective area of circuit board 10 can be increased.

### (Second Embodiment)

A construction of input device 100 according to a second embodiment will now be described. Input device 100 according to the second embodiment is different in construction from input device 100 according to the first embodiment mainly in that notch 15 is provided instead of first opening 13, and otherwise substantially the same. Features different from input device 100 according to the first embodiment will mainly be described below.

Fig. 8 is an exploded schematic plan view showing the construction of input device 100 according to the second embodiment. As shown in Fig. 8, circuit board 10 is provided with notch 15. Notch 15 passes through circuit board 10. Notch 15 opens at an outer peripheral end 16 of circuit board 10. A width of notch 15 at outer peripheral end 16 of circuit board 10 may be larger than a width of shaft portion 2. Specifically, the width (a second width W2) of notch 15 at outer peripheral end 16 of circuit board 10 in first direction X may be larger than a width (a first width W1) of a part of module housing 30. The width of notch 15 may be smaller than the width of module housing 30 and larger than the width of shaft portion 2 of first component 50. At this time, shaft portion 2 of first component 50 can be inserted in notch 15 along second direction Y.

Shaft portion 2 may integrally be fixed to first component 50. First component 50 may be fixed as not removable again from shaft portion 2 once it is attached to shaft portion 2. In first direction X, a width (a third width W3) of first component 50 may be larger than the width (second width W2) of notch 15 at outer peripheral end 16 of circuit board 10. Thus, even when shaft portion 2 is integrally fixed to first component 50, module housing 30 can be inserted in notch 15 from outer peripheral end 16 of circuit board 10 along second direction Y. In input device 100 according to the second embodiment, sensor 41 may be in a shape other than the annular shape. In a hole of notch 15 (a portion on the inner side of opening of notch 15), there may be a portion larger or smaller in diameter than the opening of notch 15.

When viewed in the direction of thickness of circuit board 10, module housing 30 may be larger in size than notch 15. Module housing 30 may be shaped not to pass through notch 15. Module housing 30 may be shaped not to pass through notch 15 from one surface toward the other surface of circuit board 10. Specifically, when viewed in the direction of thickness of circuit board 10, opposing portion 38 of module housing 30 is arranged as being superimposed on circuit board 10.

A method of incorporating operation module 90 of input device 100 according to the second embodiment into circuit board 10 will now be described.

Initially, module housing 30 and operation member 4 are inserted in notch 15 provided in circuit board 10 from a side surface side of circuit board 10. Operation member 4 may be in such a state that first component 50 is attached to shaft portion 2 or first component 50 and shaft portion 2 are integrated with each other. Module housing 30 and operation member 4 including first component 50 are then fixed to circuit board 10 with the use of opposing portion 38. By doing so, an attachment process is more simplified than in the method of incorporation in the first embodiment because first component 50 does not have to be attached to shaft portion 2 in a separate process. In the method of incorporation in the second embodiment, operation member 4 to which first component 50 is not attached may be inserted in notch 15 in circuit board 10 as in the method of incorporation in the first embodiment. In this case, first component 50 is attached to shaft portion 2 after module housing 30 and operation member 4 are fixed to circuit board 10.

### (Third Embodiment)

A construction of controller 200 according to a third embodiment will now be described. Controller 200 according to the third embodiment is different in construction from input device 100 according to the first and second embodiments mainly in including a controller housing 110, and otherwise substantially the same. Features different from input device 100 according to the first and second embodiments will mainly be described below.

Fig. 9 is a schematic plan view showing the construction of controller 200 according to the third embodiment. Controller 200 according to the third embodiment includes input device 100 and controller housing 110. Controller housing 110 is in a shape, for example, of a parallelepiped. Controller 110 is provided with a second opening 103. Second opening 103 is, for example, circular.

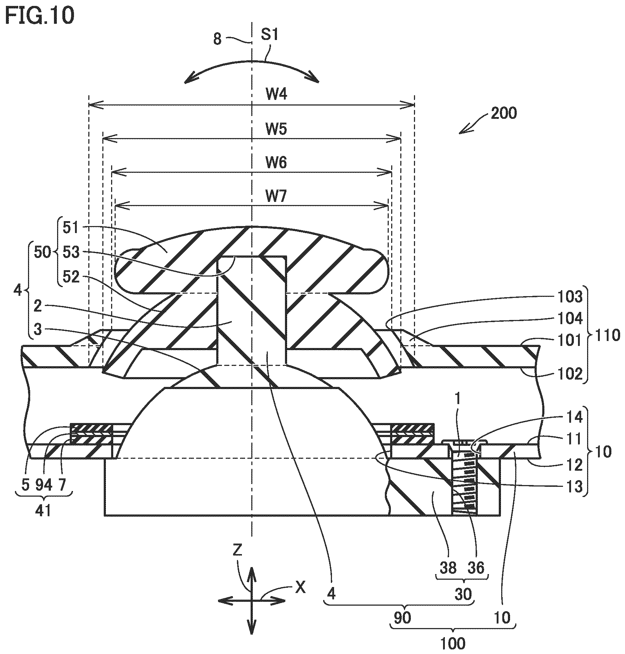

Fig. 10 is a schematic partial cross-sectional view along the line X-X in Fig. 9. The schematic partial cross-sectional view shown in Fig. 10 is in parallel to each of first direction X and third direction Z. As shown in Fig. 10, input device 100 includes circuit board 10 and operation module 90. Circuit board 10 is provided with first opening 13 or notch 15. Operation module 90 includes module housing 30 and operation member 4. Circuit board 10 and a part of operation module 90 are accommodated in controller housing 110. Operation member 4 is disposed such that a part thereof is exposed through first opening 13 or notch 15 and second opening 103. Operation member 4 is tiltably or slidably operated.

Module housing 30 includes opposing portion 38 opposed to circuit board 10. Opposing portion 38 is opposed to circuit board 10 while a part of module housing 30 is disposed to pass through first opening 13 or notch 15. Operation module 90 and circuit board 10 are fixed by fixing opposing portion 38 and circuit board 10. Circuit board 10 is fixed to controller housing 110.

As shown in Fig. 10, controller housing 110 includes an outer wall surface 101 and an inner wall surface 102. Inner wall surface 102 is located opposite to outer wall surface 101. Second opening 103 is a through hole. Second opening 103 opens in each of outer wall surface 101 and inner wall surface 102. Outer wall surface 101 may be provided with a projection 104. Projection 104 may define second opening 103. In first direction X, a width (a sixth width W6) of second opening 103 in outer wall surface 101 may be smaller than a width (a fourth width W4) of second opening 103 in inner wall surface 102.

Operation member 4 mainly includes first component 50, shaft portion 2, and support member 3. First component 50 is attached to shaft portion 2 exposed to the outside of module housing 30. First component 50 is larger than first opening 13 or notch 15. First component 50 includes projection 52 and key top 51. Projection 52 is in a shape like an umbrella. A part of projection 52 may be accommodated in the inside of controller housing 110. Projection 52 may be located in second opening 103. A part of projection 52 may be located on the outside of controller housing 110. Key top 51 may be located on the outside of controller housing 110.

As shown in Fig. 9, when viewed in the direction of thickness of circuit board 10, key top 51 is smaller in size than second opening 103. From another point of view, when viewed in the direction of thickness of circuit board 10, an outer periphery of key top 51 is surrounded by second opening 103. When viewed in the direction of thickness of circuit board 10, projection 52 may be larger in size than second opening 103. From another point of view, when viewed in the direction of thickness of circuit board 10, second opening 103 may be surrounded by the outer periphery of projection 52.

As shown in Fig. 10, in first direction X, a width (a fifth width W5) of projection 52 may be larger than the width (sixth width W6) of second opening 103 in outer wall surface 101. In first direction X, a width (a seventh width W7) of key top 51 may be smaller than the width (sixth width W6) of second opening 103 in outer wall surface 101. In first direction X, the width (fifth width W5) of projection 52 may be smaller than the width (fourth width W4) of second opening 103 in inner wall surface 102.

### (Fourth Embodiment)

A construction of controller 200 according to a fourth embodiment will now be described. Controller 200 according to the fourth embodiment is different in construction from controller 200 according to the third embodiment mainly in including a pad portion 105, and otherwise substantially the same. Features different from controller 200 according to the third embodiment will mainly be described below.

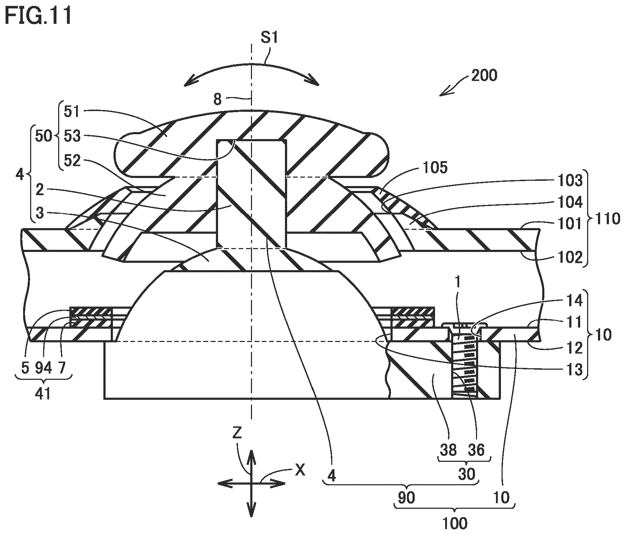

Fig. 11 is a schematic partial cross-sectional view showing the construction of controller 200 according to the fourth embodiment. The schematic partial cross-sectional view shown in Fig. 11 is in parallel to each of first direction X and third direction Z. As shown in Fig. 11, controller 200 according to the fourth embodiment includes pad portion 105. Pad portion 105 is attached to controller housing 110. Specifically, pad portion 105 is provided on projection 104. Pad portion 105 is, for example, in an annular shape.

Pad portion 105 may extend from projection 104 toward the center of second opening 103 so as to cover a part of second opening 103. When operation member 4 is tilted, first component 50 of operation member 4 comes in contact with pad portion 105. From another point of view, tilt of first component 50 of operation member 4 is restricted by pad portion 105. A deformable elastic body or a wireless sensor may be provided on circuit board 10, on pad portion 105, or on projection 52.

A specific example of a sensing method will now be described. Restriction portion 5 is deformable. When operation member 4 is tilted, initially, it comes in contact with restriction portion 5. As force is further applied to operation member 4, sensor 41 outputs a signal in accordance with deformation of restriction portion 5. As operation member 4 comes in contact with pad portion 105, tilt of operation member 4 is restricted.

In another example, sensor 41 may be provided on first component 50. Sensor 41 may be provided in an area where first component 50 comes in contact with pad portion 105. Sensor 41 may be provided on first component 50 within the area of sensing by sensor 41 where first component 50 does not come in direct contact with pad portion 105.

Input device 100 according to the first and second embodiments and controller 200 according to the third and fourth embodiments do not have to include sensor 41. In an example where sensor 41 is not provided in circuit board 10, tilt of operation member 4 may be restricted by contact of operation member 4 with circuit board 10. In order to protect circuit board 10, an elastic member may be provided in a portion of contact with operation member 4.

In a modification, operation member 4 may slidably be operated. Operation member 4 may slide, for example, in a direction perpendicular to central axis 8. A direction of slide is, for example, perpendicular to third direction Z. The direction of slide may be first direction X or second direction Y. Module housing 30 is fixed to circuit board 10 and immobilized.

In an example where operation member 4 is slidably operated, the center of annular sensor 41 and the center of projection 52 may coincide with central axis 8 of slide of operation member 4. Central axis 8 of slide refers to an initial position of slide.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 screw; 2 shaft portion; 3 support member; 4 operation member; 5 restriction portion; 7 cushion material; 8 central axis; 10 circuit board; 11 front surface; 12 rear surface; 13 first opening; 14 screw insertion hole; 15 notch; 16 outer peripheral end; 21 first outer periphery; 22 second outer periphery; 30 module housing; 36 fixed portion; 37 second front surface; 38 opposing portion; 41 sensor; 42 flexible printed circuit; 50 first component; 51 key top; 52 projection; 53 insertion hole; 90 operation module; 91 first electrode; 92 second electrode (electrode); 93 third electrode; 94 fourth electrode; 100 input device; 101 outer wall surface; 102 inner wall surface; 103 second opening; 104 projection; 105 pad portion; 110 controller housing; 200 controller; A1 first diameter; A2 second diameter; D1 first distance; D2 second distance; S1 first direction of tilt; S2 second direction of tilt; W1 first width; W2 second width; W3 third width; W4 fourth width; W5 fifth width; W6 sixth width; W7 seventh width; X first direction; Y second direction; Z third direction

## Claims

1. An input device comprising:
a circuit board provided with a first opening or a notch; and
an operation module, wherein
the operation module includes
a module housing, and
an operation member accommodated in the module housing such that a part of the operation member is exposed to outside of the module housing, the operation member being tiltably or slidably operated,
when viewed in a direction of thickness of the circuit board, the module housing is larger in size than the first opening or the notch,
the module housing includes an opposing portion opposed to the circuit board while a part of the module housing is disposed to pass through the first opening or the notch, and
the operation module and the circuit board are fixed by fixing the opposing portion and the circuit board.

2. The input device according to claim 1, wherein
the operation member includes a first component attached to a portion exposed to the outside of the module housing, the first component being larger than the first opening or the notch when viewed in the direction of thickness of the circuit board, and
while the operation module and the circuit board are fixed, the opposing portion is located on a rear surface side of the circuit board and the first component is located on a front surface side of the circuit board.

3. The input device according to claim 2, wherein
the first component includes
a key top operated by a user,
a shaft portion that extends from the key top toward the circuit board, and
a projection that projects in a direction away from a center of the shaft portion and in a direction toward the circuit board.

4. The input device according to claim 3, wherein
the circuit board is provided with the first opening,
a sensor that outputs a signal in accordance with a position or a motion of the projection or force applied to the projection is arranged on a front surface of the circuit board,
when the sensor is viewed in a direction perpendicular to the front surface, the sensor is in an annular shape that surrounds the first opening, and
a center of the sensor in the annular shape and a center of the projection coincide with a central axis of an operation to tilt or slide the operation member.

5. The input device according to claim 2, wherein
the circuit board is provided with the notch,
a width of the notch at an outer peripheral end of the circuit board is larger than a width of the module housing, and
the first component includes
a key top operated by a user, and
a shaft portion that extends from the key top toward the circuit board.

6. The input device according to any one of claims 1 to 3, wherein
a sensor that outputs a signal in accordance with a position or a motion of the operation member or force applied to the operation member is arranged on a front surface side of the circuit board, and
the opposing portion is located on a rear surface side of the circuit board.

7. The input device according to claim 6, wherein
when viewed in the direction of thickness of the circuit board, the sensor is arranged on an inner side of an outer periphery of the opposing portion, with an end of the first opening or an end of the notch being defined as a reference.

8. The input device according to claim 6 or 7, wherein
the opposing portion includes a fixed portion fixed to the circuit board, and
when viewed in the direction of thickness of the circuit board, the sensor is located on an inner side of the fixed portion, with an end of the first opening or an end of the notch being defined as a reference.

9. The input device according to any one of claims 6 to 8, wherein
when viewed in the direction of thickness of the circuit board, a distance between an end of the first opening or an end of the notch and an outer periphery of the opposing portion is longer than a distance between the end of the first opening or the end of the notch and an outer periphery of the sensor.

10. The input device according to any one of claims 1 to 7, wherein
the opposing portion includes a fixed portion fixed to the circuit board, and
a screw boss serves as the fixed portion, and the fixed portion is fixed as a screw passes through the circuit board from a surface opposite to a surface of the circuit board where the opposing portion is located and is fastened to the screw boss.

11. The input device according to any one of claims 1 to 10, wherein
the module housing includes a first electrode in the opposing portion, and
the circuit board is provided with a second electrode, and the first electrode and the second electrode are electrically connected to each other.

12. A controller comprising:
a circuit board provided with a first opening or a notch;
an operation module; and
a controller housing where the circuit board and a part of the operation module are accommodated, the controller housing being provided with a second opening, wherein
the operation module includes
a module housing, and
an operation member disposed such that a part of the operation member is exposed through the first opening or the notch and the second opening, the operation member being tiltably or slidably operated,
the module housing includes an opposing portion opposed to the circuit board while a part of the module housing is disposed to pass through the first opening or the notch, and
the operation module and the circuit board are fixed by fixing the opposing portion and the circuit board.

13. The controller according to claim 12, wherein
the operation member includes a first component attached to a portion exposed to outside of the module housing, the first component being larger than the first opening or the notch when viewed in a direction of thickness of the circuit board,
the first component includes
a projection accommodated in inside of the controller housing,
a key top located on outside of the controller housing, and
a shaft portion that extends from the key top toward the circuit board,
the projection projects in a direction away from a center of the shaft portion and in a direction toward the circuit board, and
when viewed in the direction of thickness of the circuit board, the key top is smaller in size than the second opening and the projection is larger in size than the second opening.

14. The controller according to claim 13, wherein
the circuit board is provided with the first opening,
a sensor that outputs a signal in accordance with a position or a motion of the projection or force applied to the projection is arranged on a front surface of the circuit board,
when the sensor is viewed in the direction perpendicular to the front surface, the sensor is in an annular shape that surrounds the first opening, and
a center of the sensor in the annular shape and a center of the projection coincide with a central axis of an operation to tilt or slide the operation member.

15. The controller according to claim 13, wherein
the circuit board is provided with the notch,
a width of the notch at an outer peripheral end of the circuit board is larger than a width of the module housing, and
the operation member includes a shaft portion fixed as being integrated with the first component.

16. The controller according to claim 15, wherein
a sensor that outputs a signal in accordance with a position or a motion of the operation member or force applied to the operation member is arranged on a front surface side of the circuit board, and
the opposing portion is located on a rear surface side of the circuit board.

17. The controller according to claim 16, wherein
when viewed in the direction of thickness of the circuit board, the sensor is arranged on an inner side of an outer periphery of the opposing portion, with an end of the first opening or an end of the notch being defined as a reference.

18. The controller according to claim 16 or 17, wherein
the opposing portion includes a fixed portion fixed to the circuit board, and
when viewed in the direction of thickness of the circuit board, the sensor is located on an inner side of the fixed portion, with an end of the first opening or an end of the notch being defined as a reference.

19. The controller according to any one of claims 16 to 18, wherein
when viewed in the direction of thickness of the circuit board, a distance between an end of the first opening or an end of the notch and an outer periphery of the opposing portion is longer than a distance between the end of the first opening or the end of the notch and an outer periphery of the sensor.

20. The controller according to any one of claims 12 to 17, wherein
the opposing portion includes a fixed portion fixed to the circuit board, and
a screw boss serves as the fixed portion, and the fixed portion is fixed as a screw passes through the circuit board from a surface opposite to a surface of the circuit board where the opposing portion is located and is fastened to the screw boss.

21. The controller according to any one of claims 12 to 20, wherein
the module housing includes a first electrode in the opposing portion, and
the circuit board is provided with a second electrode, and the first electrode and the second electrode are electrically connected to each other.
